# EUROPÄISCHE PATENTSCHRIFT

(11) **EP 3 065 240 B1**
(45) Veröffentlichungstag und Bekanntmachung des Hinweises auf die Patenterteilung: **06.05.2020**
(21) Anmeldenummer: 16158007.1
(22) Anmeldetag: 01.03.2016
(51) Int. Cl.: H02G 1/02

(54) **VERFAHREN ZUR DEMONTAGE EINES ZWISCHEN ZWEI MASTEN GESPANNTEN SEILES, INSBESONDERE ZUR DEMONTAGE EINES ERDSEILES VON FREILEITUNGSMASTEN**
METHOD FOR DISASSEMBLING A CABLE TENSIONED BETWEEN TWO POLES, IN PARTICULAR AN EARTH CABLE OF OPEN AIR POLES
PROCEDE DE DEMONTAGE D'UN CABLE TENDU ENTRE DEUX MATS, EN PARTICULIER DE DEMONTAGE D'UN CABLE DE GARDE DE PYLONES POUR LIGNES ELECTRIQUES

(30) Priorität: 05.03.2015 DE 102015103182
(43) Veröffentlichungstag der Anmeldung: 07.09.2016
(73) Patentinhaber: LTB Leitungsbau GmbH, 01445 Radebeul (DE)
(72) Erfinder: Tholfus, Jens, 01156 Dresden (DE)
(74) Vertreter: Sperling, Thomas

(56) Entgegenhaltungen:
- DE-A1- 2 461 318
- FR-A1- 2 778 505
- GB-A- 2 311 899
- JP-A- 2007 325 462
- KR-A- 20060 025 426

## Beschreibung

Die Erfindung betrifft ein Verfahren zur Demontage eines zwischen zwei Masten gespannten letzten Seiles. Definiert wird das Verfahren zur Demontage der sogenannten letzten Leine bei Arbeiten nach dem Rollenleineverfahren .

Werden zwischen Freileitungsmasten alle Leitungen demontiert, so wird in der Regel bei der Demontage das jeweils gerade zu demontierende Seil mit Hilfe der noch verbleibenden Seile nach dem Rollenleineverfahren gegen das Herabfallen der Seilenden gesichert. Das letzte Seil, auch als letzte Leine bezeichnet, jedoch kann nicht durch das Rollenleineverfahren gesichert werden. Eine Gefährdung durch das Herabfallen eines nach dem Durchtrennen freien Endes eines Seiles ist in Bereichen von Leitungskreuzungen, von Autobahnen, Schnellstraßen, Bundesstraßen sowie Bahnkreuzungen oder in Wohn- und Erholungsgebieten aus Sicherheitsgründen nicht hinnehmbar. Somit müssen in diesen Bereichen diverse Regularien und Verfahrensweisen sowie behördliche Vorgaben beachtet werden und beispielsweise Streckenabschnitte abgeschaltet, Straßen gesperrt oder Sicherungsgerüste als Kreuzungsschutz aufgebaut werden.

Die für diese Arbeiten erforderlichen Genehmigungen erfordern zudem einen großen zeitlichen Vorlauf durch die relativ langen Bearbeitungszeiten. Andererseits ist der Zeitrahmen für diese Arbeiten aus wirtschaftlichen Gründen relativ knapp und dies steht im Gegensatz zu teilweise wirtschaftlich unverhältnismäßigen Vorgaben von Seiten der Ämter und Behörden zur Bauausführung. Diese Konstellation führt zu erheblichen Kosten und gegebenenfalls auch Verzögerungen bei der Demontage von Seilen.

Aus JP 2007 325462 A ist ein Verfahren zur vollständigen Demontage einer zwischen mindestens zwei Masten gespannten Stromleitung bekannt, wobei die Stromleitung mit mehreren Auftriebselementen in Form von Ballons versehen wird, um ein Herabfallen zwischen den Masten zu verhindern. Die bekannte Lösung hat den Nachteil, dass aufgrund des hohen Gewichts der Stromleitung mehrere Auftriebselemente eingesetzt werden müssen, wobei deren Windangriffsfläche bei widrigen Wetterbedingungen eine sichere Bergung der demontierten Stromleitung erschweren kann und das Unfallrisiko gesteigert wird.

Aus den Schriften GB 2 311 899 A, FR 2 778 505 A1, DE 24 61 318 A1 und KR 2006 0025426 A sind vergleichbare Lösungen zum Austauschen von Stromleitungen zwischen mindestens zwei Masten bekannt, wobei eine Rollenleine zwischen zwei Masten gespannt wird, über die eine demontierte Stromleitung über Rollen entfernt werden kann. Dabei wird zuvor an einem Ende der demontierten Stromleitung eine neue Stromleitung befestigt, so dass die neue Stromleitung beim Entfernen der demontierten Leitung zwischen den Masten über die Rollen der Rollenleine eingezogen wird. Abschließend wird die Rollenleine über die ersetzte neue Stromleitung geborgen. Bei den bekannten Verfahren wird das Problem einer herabfallenden Stromleitung durch gleichzeitiges Ersetzten durch eine neue Stromleitung umgangen und somit nicht gelöst.

Um die angegebenen Schwierigkeiten teilweise zu überwinden, müssen derartige Demontagen häufig nachts oder an verkehrsberuhigten Tagen am Wochenende stattfinden, was jedoch mit einem erhöhten wirtschaftlichen Aufwand für die durchführenden Unternehmen und damit verbundene Kosten führt.

Die Aufgabe der Erfindung besteht somit darin, ein Verfahren anzugeben, durch welches die letzte Leine nach dem Rollenleineverfahren ohne Streckensperrungen, Abschaltungen und aufwändige Gerüstbaumaßnahmen demontiert werden kann. Zumindest soll ein Teil dieser aufwändigen Maßnahmen reduziert werden und somit Kosten, Zeit und sonstiger Aufwand eingespart werden.

Die Aufgabe wird durch ein Verfahren mit den Merkmalen gemäß Patentanspruch 1 gelöst. Weiterbildungen sind in den abhängigen Patentansprüchen angegeben.

Insbesondere wird die Aufgabe durch ein Verfahren zur Demontage eines zwischen zwei Masten gespannten letzten Seiles gelöst, welches aus folgenden Schritten besteht:
- Zunächst wird eine Rollenleine mit Rollen zwischen den benachbarten Masten am Seil angebracht.
- Hernach werden die Rollenleine gespannt und die Rollen werden umgekippt.
- Das letzte Seil wird als sogenannte letzte Leine über die Rollen der Rollenleine gesichert ausgezogen
- und dabei wird eine Hilfsleine, welche ein geringeres Gewicht als das letzte Seil aufweist, zwischen den Masten in die Rollen eingezogen.
- Die Hilfsleine wird nachfolgend gespannt und die Rollen werden umgekippt.
- Nun wird die Rollenleine mit den Rollen ausgezogen, so dass nur noch die Hilfsleine zwischen den Masten gespannt ist.
- Ein Auftriebselement wird nun an einem Ende der Hilfsleine angebracht.
- Die Hilfsleine wird nun an diesem Ende, dem freien Seilende, vom Mast gelöst und freigegeben und gleichzeitig wird die Hilfsleine vom anderen Ende her eingezogen.
- Das Auftriebselement am freien Seilende ist derart ausgestaltet, dass das Auftriebselement mit dem freien Seilende der Hilfsleine während des Einziehens in der Höhe der Mastspitze oder darüber verbleibt und nicht auf den Boden herabfällt.

Die Konzeption der Erfindung besteht somit darin, eine sogenannte letzte Leine einzuziehen, deren freies Ende durch die Wirkung eines Auftriebselementes in der Höhe der Mastspitze oder darüber verbleibt. Das Auftriebselement trägt somit das freie Ende der letzten Leine und verhindert das Herabfallen der Leine.

Bevorzugt wird als Auftriebselement in dem Verfahren ein Ballon mit einem Gas mit geringerer Dichte als die Dichte der das Auftriebselement umgebenden Luft eingesetzt.

Vorteilhaft wird der Ballon mit Helium befüllt, da dieses sehr viel leichter als Luft und zudem chemisch weitgehend inert, also nicht explosiv oder giftig ist.

Alternativ kann beispielsweise auch Wasserstoff als Gas für die Füllung eines Ballons als Auftriebselement eingesetzt werden, wobei die Besonderheiten des Einsatzes eines brennbaren und hoch entzündlichen Gases beim Handling zu beachten sind.

Wiederum alternativ ist der Einsatz eines Heißluftballons vorteilhaft möglich, da mit diesem auch vorteilhaft ferngesteuert eine gezielte Positionierung des Ballons in der Höhe möglich ist.

Besonders vorteilhaft wird ein zusätzliches Auftriebselement am freien Seilende der Hilfsleine vorgesehen. Das als Strömungsleitelement ausgeführte Auftriebselement erfährt während des Einziehens der Hilfsleine durch die Umströmung der Luft einen zusätzlichen Auftrieb.

Alternativ zum Ballon kann als Auftriebselement auch nur ein Strömungsleitelement eingesetzt werden, sofern die Einzugsgeschwindigkeit des Seiles und damit die Geschwindigkeit des am Seil befestigten Strömungsleitelementes derart bemessen ist, dass der Auftrieb durch die Umströmung des Strömungsleitelementes ausreicht, um das freie Seilende der Hilfsleine in der Höhe der Mastspitze oder darüber zu halten.

Eine weitere vorteilhafte Ausgestaltung der Erfindung besteht darin, dass als Austriebselement ein Strömungsleitelement in der Ausgestaltung als Gleitschirm eingesetzt wird, der bei entsprechender Geschwindigkeit einen Auftrieb entwickelt, um das Gewicht des freien Seilendes zu tragen.

Die erforderliche Seileinzugsgeschwindigkeit zur Erlangung eines Auftriebs von Strömungsleitelementen wird insbesondere durch den Einsatz einer Seilwinde erreicht.

Um den Seileinzug der Hilfsleine optimal auszugestalten, wird vorteilhaft am Mast eine Führung für die Hilfsleine vorgesehen, sodass ein Einzug der Leine mit der erforderlichen Geschwindigkeit zur Entwicklung des Auftriebes ohne zu großen Materialverschleiß möglich ist. Die Führung der Hilfsleine am Mast stellt auch sicher, dass der Seileinzug an der Winde immer mit dem gleichen Winkel erfolgt, so dass der Einzug der Hilfsleine auch bei nicht optimalen Windverhältnissen erfolgen kann.

Besonders bevorzugt wird die Hilfsleine aus einem Seil mit geringem spezifischen Gewicht ausgeführt sein.

Die Vorteile des erfindungsgemäßen Verfahrens sind sehr vielfältig. Zunächst sind sicherheitstechnische Vorteile zu nennen, da die letzte Leine zwischen Freileitungen konzeptionsgemäß zunächst in ihrem Gewicht reduziert und nachfolgend gefahrlos eingezogen wird, ohne dass das freie Seilende herabfällt und gegebenenfalls unkontrolliert in Kreuzungsbereichen den Boden berührt.

Eine Sperrung von Streckenabschnitten von Straßen, Autobahnen oder Bahntrassen kann bei diesem Verfahren vermieden werden. Nicht zuletzt sind die mit den strengen Sicherheitsauflagen verbundenen Kosten durch das vorgeschlagene Verfahren reduzierbar, da die Kosten für Hubarbeitsbühnen und zusätzliche Mehrkosten für das Personal wegen Nachtarbeit oder Feiertagsarbeit und ähnlichem nicht mehr anfallen.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: Prinzipskizze Rollenleineneinzug,
- Fig. 2:: Prinzipskizze Rollenleine Umkippen,
- Fig. 3:: Prinzipskizze Hilfsleine mit Ballon vor dem Einzug und
- Fig. 4:: Prinzipskizze Hilfsleine mit Ballon und Strömungsleitelement beim Einzug.

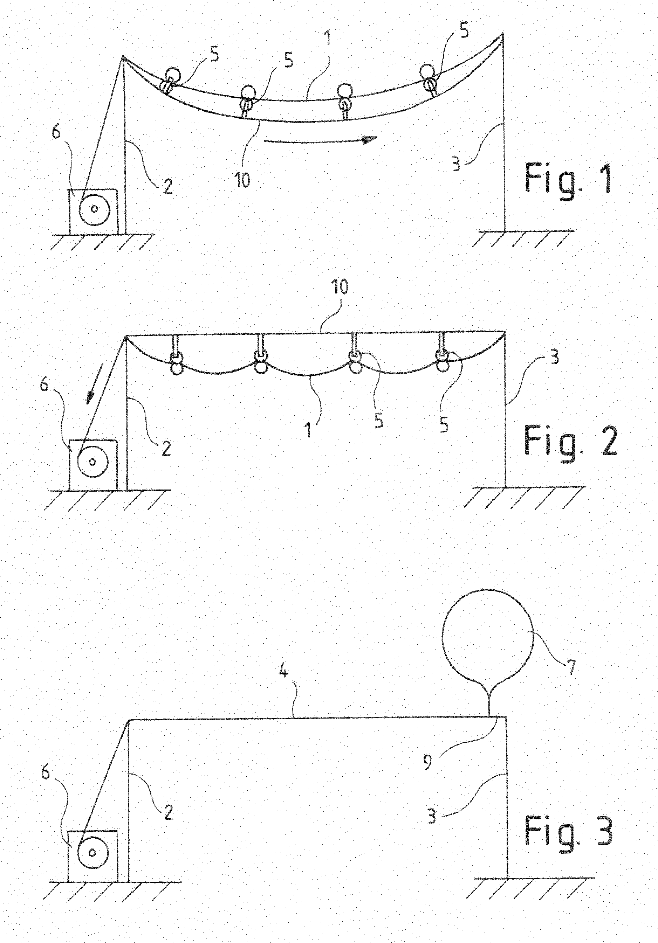

In den Figuren 1 und 2 ist das bekannte Prinzip der Seildemontage mittels Rollenleine schematisch dargestellt.

In Figur 1 ist zwischen einem ersten Mast 2 und einem zweiten Mast 3 ein Seil, beispielsweise ein Erdseil 1, als letztes Seil gespannt. Um dieses Seil 1 abzuziehen, wird nun zunächst eine Rollenleine 10 von Mast 2 zum Mast 3 hin auf das Seil 1 aufgezogen. Die Rollen 5 sind in etwa gleichverteilt angeordnet. Dieser Verfahrensschritt des Aufziehens der Rollenleine ist mit einem Pfeil entlang der Rollenleine 10 dargestellt.

Nach dem Fixieren der Rollenleine 10 am Mast 3 wird, wie in Figur 2 dargestellt, nachfolgend die Rollenleine 10 mit den Rollen 5 gespannt, wodurch die Rollen 5 umkippen und das Seil 1 nun auf den Rollen 5 locker aufliegt beziehungsweise zwischen zwei Rollen 5 zur Führung des Seiles 1 positioniert ist, da die mit der Seilwinde 6 gespannte Rollenleine 10 nach dem Umkippen der Rollen 5 nunmehr über dem Seil 1 positioniert ist.

Das entspannte Seil 1 kann nun am zweiten Mast 3 gelöst und freigegeben werden und beispielsweise mittels einer Seilwinde 6 und über einen Mast 2 eingezogen werden. Nun kann das gebildete freie Ende des Seiles 1 nicht auf die Erde herabfallen, da es in den Führungen der Rollen 5 geführt ist und maximal im Abstand zwischen benachbarten Rollen 5 nach unten fallen beziehungsweise herabhängen kann.

Das Verfahren zur Demontage wird in der Ausgestaltung der Demontage eines Erdseiles mit einem Zwischenschritt zwischen der Darstellung gemäß Fig. 2 und Fig. 3 ausgestaltet.

Mit dem Abziehen des letzten Seiles 1 wird eine leichte Hilfsleine 4 durch die Rollen 5 durchgezogen. Anschließend wird die Hilfsleine 4 gespannt, so dass die Rollenleine 10 dann entspannt ist und von der zwischen den Masten 2, 3 verbleibenden Hilfsleine 4 als letzten Leine abgezogen werden kann. Diese leichte Hilfsleine 4 kann dann mit geringerem Aufwand wegen ihres geringeren Gewichts eingezogen werden.

Gemäß einer nicht beanspruchten Alternative sind die Rollenleine 10 und die Rollen 5 selbst aus einem sehr leichten Material ausgebildet, sodass gegebenenfalls auch die sehr leicht ausgeführte Rollenleine 10 mit den Rollen 5 unmittelbar nach dem Ausziehen des Erdseiles 1 zwischen den Masten 2, 3 mittels des Auftriebselementes eingezogen werden kann, ohne den zusätzlichen Zwischenschritt des Einziehens einer Hilfsleine 4 vornehmen zu müssen.

In Figur 3 ist nun die Hilfsleine 4 nach dem Einzug der Rollenleine 10 mit den Rollen in straff gespanntem Zustand zwischen dem ersten Mast 2 und dem zweiten Mast 3 dargestellt. An einem Ende der Hilfsleine 4 wird ein Ballon 7 angebracht, der ein Gas mit einer geringeren Dichte als die der umgebenden Luft befüllt ist. Besonders geeignet ist Helium als Ballongas, da dieses sehr leicht und damit tragfähig, nicht brennbar und ungiftig ist.

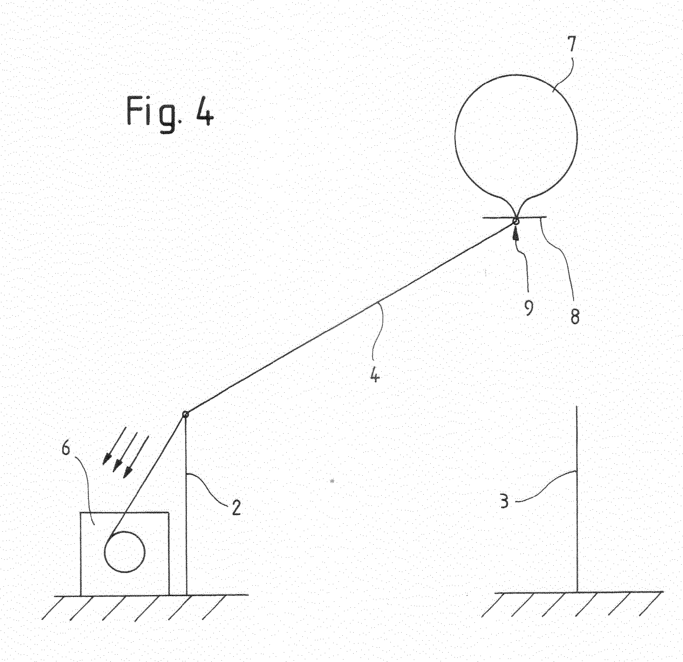

Anschließend wird die Hilfsleine 4 am zweiten Mast 3 gekappt und in Figur 4 ist dargestellt, wie sich das freie Seilende 9 der Hilfsleine 4 durch das Auftriebselement in Form des Ballons 7 nach oben bewegt und gleichzeitig durch die Seilwinde 6 und die angedeuteten Pfeile mit hoher Geschwindigkeit über den Mast 2 eingezogen wird. Die hohe Einzugsgeschwindigkeit führt zu einer Umströmung der Strömungsleitelemente 8, welche am Ballon 7 angeordnet sind und die in Folge der hohen Geschwindigkeit und der aerodynamischen Gestaltung zusätzliche Auftriebskräfte entwickeln. Nachdem die Hilfsleine 4 eingezogen und der Ballon 7 an der Mastspitze des Mastes 2 angekommen ist kann der Ballon 7 abgenommen werden.

### Bezugszeichenliste

- 1: Seil, Erdseil
- 2: erster Mast
- 3: zweiter Mast
- 4: Hilfsleine
- 5: Rollen
- 6: Seilwinde
- 7: Auftriebselement, Ballon
- 8: Strömungsleitelement
- 9: freies Seilende
- 10: Rollenleine

## Patentansprüche

1. Verfahren zur Demontage eines zwischen zwei Masten (2, 3) gespannten letzten Seiles (1), umfassend die folgenden Schritte in der angegebenen Abfolge
- eine Rollenleine (10) mit Rollen (5) wird zwischen den Masten (2, 3) am Seil (1) ausgebracht,
- die Rollenleine (10) wird gespannt und die Rollen (5) werden umgekippt,
- das letzte Seil (1) wird über die Rollen (5) der Rollenleine (10) gesichert ausgezogen und
- dabei wird eine Hilfsleine (4), welche ein geringeres Gewicht als das letzte Seil (1) aufweist, zwischen den Masten (2, 3) in die Rollen (5) der Rollenleine (10) eingezogen,
- die Hilfsleine (4) wird gespannt und die Rollen (5) werden umgekippt,
- die Rollenleine (10) wird mit den Rollen (5) von der Hilfsleine (4) abgezogen und nur noch die Hilfsleine (4) ist jetzt zwischen den Masten (2, 3) gespannt,
- ein Auftriebselement (7) wird an einem Ende (9) der Hilfsleine (4) angebracht, wonach
- die Hilfsleine (4) an diesem freien Ende (9) freigegeben und gleichzeitig am anderen Ende die Hilfsleine (4) eingezogen wird,
- wobei das Auftriebselement (7) derart ausgestaltet ist, dass das Auftriebselement (7) mit dem freien Seilende (9) der Hilfsleine (4) während des Einziehens in der Höhe der Mastspitze oder darüber verbleibt.

2. Verfahren nach Anspruch 1, **dadurch gekennzeichnet, dass** als Auftriebselement (7) ein Ballon mit einem Gas mit geringerer Dichte als die der umgebenden Luft eingesetzt wird.

3. Verfahren nach Anspruch 1 oder 2, **dadurch gekennzeichnet, dass** als Auftriebselement (7) ein Ballon mit Helium-, Wasserstoff- oder Heißluftfüllung eingesetzt wird.

4. Verfahren nach einem der Ansprüche 2 bis 3, **dadurch gekennzeichnet, dass** ein zusätzliches Auftriebselement (7) in Form eines Strömungsleitelementes (8) am freien Seilende (9) der Hilfsleine (4) angebracht wird.

5. Verfahren nach Anspruch 1, **dadurch gekennzeichnet, dass** als Auftriebselement (7) ein Strömungsleitelement (8) eingesetzt wird, wobei die Seileinzugsgeschwindigkeit derart bemessen ist, dass der Auftrieb durch die Umströmung des Strömungsleitelementes (8) ausreicht, um das freie Seilende (9) der Hilfsleine (4) in der Höhe der Mastspitze oder darüber zu halten.

6. Verfahren nach Anspruch 5, **dadurch gekennzeichnet, dass** als Auftriebselement (7) ein Gleitschirm eingesetzt wird.

7. Verfahren nach einem der Ansprüche 1 bis 6, **dadurch gekennzeichnet, dass** zum Einziehen der Hilfsleine (4) eine Seilwinde (6) eingesetzt wird.

8. Verfahren nach einem der Ansprüche 1 bis 7, **dadurch gekennzeichnet, dass** an dem Mast (2), über den die Hilfsleine (4) eingezogen wird, Mittel zur Führung der Hilfsleine (4) während des Einziehens angeordnet sind.

9. Verfahren nach einem der Ansprüche 1 bis 8, **dadurch gekennzeichnet, dass** die Hilfsleine (4) als Polypropylenseil ausgeführt ist.

## Claims

1. Method for removing a final rope (1) that is tensioned between two masts (2, 3), comprising the following steps in the sequence stated:
- a roller line (10) with rollers (5) is attached to the rope (1) between the masts (2, 3),
- the roller line (10) is tensioned and the rollers (5) are flipped over,
- the last rope (1) is pulled out securely using the rollers (5) of the roller line (10) and
- an auxiliary line (4), which exhibits a lower weight than the last rope (1), is drawn in between the masts (2, 3) and into the rollers (5) of the roller line (10),
- the auxiliary line (4) is tensioned and the rollers (5) are flipped over,
- the roller line (10) is pulled off the auxiliary line (4) with the rollers (5), so that only the auxiliary line (4) is now tensioned between the masts (2, 3),
- a lift element (7) is attached to one end (9) of the auxiliary line (4), meaning that
- the auxiliary line (4) is released at this free end (9) and, at the same time, the auxiliary line (4) is drawn in at the other end
- wherein the lift element (7) is constructed in such way that the lift element (7) with the free end (9) of the auxiliary line (4) remains at the height of the mast top or above while being pulled in.

2. Method according to claim 1, **characterised in that** a balloon filled with gas of lower density than that of the surrounding air is used as the lift element (7).

3. Method according to claim 1 or 2, **characterised in that** a balloon filled with helium, hydrogen or hot air is used as the lift element (7).

4. Method according to one of the claims 2 to 3, **characterised in that** an additional lift element (7) in the form of a flow guide element (8) is attached to the free end (9) of the auxiliary line (4).

5. Method according to claim 1, **characterised in that** a flow guide element (8) is used as the lift element (7), wherein the rope pull-in speed is dimensioned in such a way that the lift resulting from the flow around the flow guide element (8) is sufficient to hold the free end (9) of the auxiliary line (4) at the height of the mast top or above.

6. Method according to claim 5, **characterised in that** a kind of parachute is used as the lift element (7).

7. Method according to one of the claims 1 to 6, **characterised in that** a rope winch (6) is used to pull in the auxiliary line (4).

8. Method according to one of the claims 1 to 7, **characterised in that** means of guiding the auxiliary line (4) are in place on the mast (2) via which the auxiliary line (4) is pulled in throughout the process of pulling in the rope.

9. Method according to one of the claims 1 to 8, **characterised in that** the auxiliary line (4) is constructed as a polypropylene rope.

## Revendications

1. Procédé de démontage d'un dernier câble (1) tendu entre deux mâts (2, 3), comprenant les étapes suivantes dans l'ordre indiqué
on fait sortir, entre les mâts (2, 3), contre le câble (1), un cordon (10) équipé de roulettes (5),
on tend le cordon (10) à roulettes et fait basculer les roulettes (5),
on retire le dernier câble (1) qui est sécurisé via les roulettes (5) du cordon (10) et
et ce faisant l'on enfile un cordon auxiliaire (4) dont le poids est inférieur au dernier câble (1), entre les mâts (2, 3), dans les roulettes (5) du cordon (10),
on tend le cordon auxiliaire (4) et fait basculer les roulettes (5),
on retire le cordon (10) avec les roulettes (5) du cordon auxiliaire (4) et il ne reste plus, maintenant, que le cordon auxiliaire (4) tendu entre les mâts (2, 3),
on fixe un élément sustentateur (7) à une extrémité (9) du cordon auxiliaire (4), ce après quoi le cordon auxiliaire (4) est libéré à cette extrémité libre (9) et l'on rentre simultanément le cordon auxiliaire (4) à l'autre extrémité, sachant que l'élément sustentateur (7) est configuré de telle manière que l'élément sustentateur (7) demeure, avec l'extrémité libre (9) du cordon auxiliaire (4), pendant la rentrée, à la hauteur de la pointe du mât ou au-dessus.

2. Procédé selon la revendication 1, **caractérisé en ce que** l'élément sustentateur (7) mis en oeuvre est un ballon rempli d'un gaz dont la densité est inférieure à celle de l'air ambiant.

3. Procédé selon la revendication 1 ou 2, **caractérisé en ce que** l'élément sustentateur (7) mis en œuvre est un ballon rempli d'hélium, d'hydrogène ou d'air chaud.

4. Procédé selon la revendication 2 à 3, **caractérisé en ce qu'un** élément sustentateur supplémentaire (7) en forme d'élément de guidage de flux (8) est monté contre l'extrémité libre (9) du cordon auxiliaire (4).

5. Procédé selon la revendication 1, **caractérisé en ce que** comme élément sustentateur (7) est mis en œuvre un élément de guidage de flux (8), sachant que la vitesse de rentrée du cordon est dimensionnée de telle sorte que la sustentation engendrée par l'inversion de flux de l'élément de guidage de flux (8) suffit pour maintenir l'extrémité libre (9) du cordon auxiliaire (4) à la hauteur de la pointe du mât ou au-dessus.

6. Procédé selon la revendication 5, **caractérisé en ce que** l'élément sustentateur (7) mis en œuvre est un parapente.

7. Procédé selon l'une des revendications 1 à 6, **caractérisé en ce qu'un** treuil (6) est mis en œuvre pour rentrer le cordon auxiliaire (4).

8. Procédé selon l'une des revendications 1 à 7, **caractérisé en ce que** contre le mât (2) via lequel on rentre le cordon auxiliaire (4) sont disposés des moyens pour guider le cordon auxiliaire (4) pendant la rentrée.

9. Procédé selon l'une des revendications 1 à 8, **caractérisé en ce que** le cordon auxiliaire (4) est réalisé sous forme de cordon en polypropylène.
